# EUROPEAN PATENT APPLICATION

(11) **EP 4 714 920 A1**
(43) Date of publication of application: **25.03.2026**
(21) Application number: 24202258.0
(22) Date of filing: 24.09.2024
(51) Int. Cl.: C04B 20/00, C04B 28/02

(54) **FIBER MATERIAL FOR REINFORCEMENT OF STRUCTURES**

(71) Applicant: Sika Technology AG, 6340 Baar (CH)
(72) Inventor: GÖSSI, Matthias, 8048 Zürich (CH); QUINZLER, Dorothee, 37060 Castel D'Azzano (IT)
(74) Representative: Sika Patent Attorneys

(57) **Abstract**

The invention is directed to a fiber material for reinforcement of structures, especially concrete structures, the fiber material comprising:
a) A plurality of individually twisted composite fibers having a twist degree of 1 - 200 turns/m and/or
b) A plurality of twisted cords comprising at least two composite fibers twisted together and having a twist degree of 1 - 200 turns/m,
wherein each composite fiber comprises non-metallic load-bearing fibers kept together by an organic synthetic material.

## Description

### Technical field

The invention relates to fiber material for use in reinforcing of structures, especially concrete structures. Furthermore, the invention is directed to cementitious materials and reinforced structures, particularly reinforced concrete structures comprising a fiber material, especially comprising individually twisted or together twisted composite fibers.

### Background Art

Concrete is the most commonly used man-made construction material for structural applications in the world. Generally, concrete is a brittle material having a high compressive strength but low tensile strength (crack strength). The tensile strength of concrete can be improved by using modifying additives, such as rebars and reinforcing meshes. Furthermore, synthetic organic, metal, glass, and natural fibers have also been used to improve the tensile strength (strength before first crack occurs) and ensure the cohesion and increase the energy absorption of cracked concrete.

Different types of fibers can be used to improve specific properties of concrete. Synthetic microfibers (microfibers) having an equivalent diameter of < 0.3 m are typically used to prevent plastic shrinkage cracking as the concrete sets, i.e. to prevent micro-cracking of the concrete during the first 24 to 48 hours after casting. Macro-synthetic fibers (macrofibers) having equivalent diameters of equal or greater than 0.3 mm are added to concrete compositions to improve overall toughness quantified by measurements of residual strength after first break has occurred. Macrofibers are typically added to concrete mixtures at fiber dosages of 1.0 to 10 kg/m³. Macrofibers are available in various shapes, such as rope, tape or stick and they may be twisted, serrated, or embossed to enhance mechanical bonding to concrete. The concrete reinforcement properties of synthetic fibers depend mainly on the strength and elastic modulus of the fiber and on the adhesion between the fiber and the concrete matrix.

The benefits obtained with fiber-reinforced concrete has led to the widespread use of fibers in lieu of conventional temperature and shrinkage reinforcement as well as toughness in many applications, including slab-on-ground. Commonly used plastic materials for concrete reinforcement fibers include polyolefins, such as polypropylene (PP), and polyethylene (PE), polyethylene terephthalate (PET), aramids, for example Kevlar, polyamides, and polyvinyl alcohol fibers. Polypropylene and polyethylene have been widely used as raw material for both micro and macrofibers. Their advantages include easy processability to fibers through melt-spinning (extrusion) processes, low cost, and high resistance in alkaline environment. Furthermore, in comparison to steel fibers, the polymeric fibers usually are non-corrosive, lighter than steel, easier to apply, and they lead to less wear in mixing and feeding devices.

Some polymeric fibers have certain disadvantages, for example, high cost, low alkaline resistance, low elastic modulus, and low tenacity or low interfacial bonding between the concrete matrix and the fiber. Furthermore, due to their low density and hydrophobicity, polymeric fibers tend to bloom to the surface during finishing, i.e. the fibers tend to protrude from the surface of the concrete before completion of curing. The interfacial bonding between the fiber and concrete can be controlled, for example, by using coatings applied to the surface of the fibers or by applying a surface structure, for example, by crimping or embossing, or by chemical modification of the fiber surface. However, these methods typically result in increased costs and complexity of the fiber production process.

Carbon fibers having a diameter of 5 to 10 µm have been used in various reinforcing applications due to their high stiffness, high tensile strength, high strength to weight ratio, high chemical resistance, high-temperature tolerance, and low thermal expansion. Carbon fibers are typically combined with other materials, such as plastic, to form a composite material. Several thousand carbon fibers can also be bundled together to a cord, which can be used as such or woven into a fabric. Composite fibers comprising a bundle of carbon fibers kept together by a matrix of synthetic organic material have also been suggested reinforcing of concrete structures. For example, US 2021/0245456 A1 (USB I, LLC) describes improved composite fibers comprising a core fiber made of basalt, glass fibers, carbon fibers, aramid, para-aramid, or meta-aramid fibers and a resin and structural materials mixed with these composite fibers. The fibers are produced by a process that vertically texturizes and impregnates the resin into the fibers without introducing any substantial amount of microbubbles in the resin. By using vertical impregnation and twisting of fiber strands with specific viscosity control, stronger composite fibers, in which substantially no microbubbles are trapped, are produced with improved tensile strength and lower variance in tensile strength, for use in strengthening structural concrete and other structural materials.

One of the challenges related to the use of macrofibers for reinforcing of structures is that the fibers tend to clump together in balls (balling) that are difficult to break when added to a mineral binder-based construction material, especially a fresh concrete composition. Another challenge relates to the uniform distribution of the macrofibers in the concrete mix. The uniform distribution of fibers is usually achieved by providing the fibers in form of prepacked fiber "pucks" or "bundles" wrapped in a water-soluble polyvinyl alcohol film, from which the individual fibers are released in a controlled manner during mixing, thus providing more uniform fiber distribution. However, if the fiber bundles are too big, fiber entanglement, still occurs.

Thus, there is still a need for new and improved solutions that overcome the aforementioned disadvantages as far as possible.

### Summary of the invention

The objective of the present invention is to provide an improved fiber material for reinforcement of structures, especially concrete structures.

Surprisingly, it has been found out that the object can be achieved by the features of claim 1.

Specifically, according to the invention, a fiber material for reinforcement of structures is proposed, the fiber material comprising:
a) A plurality of individually twisted composite fibers having a twist degree of 1 - 200 turns/m, preferably 5 - 200 turns/m and/or
b) A plurality of twisted cords comprising at least two composite fibers twisted together and having a twist degree of 1 - 200 turns/m, preferably 5 - 200 turns/m,
wherein each composite fiber comprises non-metallic load-bearing fibers kept together by an organic synthetic material.

As it turned out, addition of the fiber material comprising the fibers a) and/or b) to a mineral binder-based construction material results in improved energy absorption of cracked concrete determined as the residual (post-cracking) bending strength at various specified values of the opening of the preformed crack (CMOD). The advantageous effects can be achieved at dosages of the fiber material that do not significantly affect processing of the construction material during production of a fiber-reinforced structure.

Furthermore, the fiber material can easily be added and be homogeneously mixed with a mineral binder-based construction material when preparing the fiber-reinforced structures. Thanks to the organic synthetic material, which in certain embodiments forms a casing for the non-metallic load bearing fibers, wear off of the feeding and mixing equipment is reduced to a minimum.

Additional aspects of the present invention are presented in further independent claims. Preferred embodiments of the invention are outlined throughout the description and the dependent claims.

### Detailed description of the invention

A first aspect of the present invention is directed to a fiber material for reinforcement of structures is proposed, the fiber material comprising:
a) A plurality of individually twisted composite fibers having a twist degree of 1 - 200 turns/m, preferably 5 - 200 turns/m and/or
b) A plurality of twisted cords comprising at least two composite fibers twisted together and having a twist degree of 1 - 200 turns/m, preferably 5 - 200 turns/m,
wherein each composite fiber comprises non-metallic load-bearing fibers kept together by an organic synthetic material.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The unit "tex" is a measure for the linear density of fibers, defined as the mass in grams per 1000 meters length.

The fiber material of the present invention includes individually twisted composite fibers and/or twisted cords comprising at least two composite fibers twisted together.

In embodiments, the fiber material may include, in addition to or instead of the twisted cords comprising at least two composite fibers twisted together, twisted cords comprising at least three composite fibers twisted together.

Particularly, the individually twisted composite fibers have been obtained by twisting a composite fiber around itself, especially in Z or S direction and/or wherein the twisted cords have been obtained by twisting two or more composite fibers around each other, especially in Z or S direction.

The "twist direction" refers here to the helix incline direction of a fiber, yearn, or a cord when it is in vertical position. In a twisting process, if the helix incline is applied in a way similar to the letter S, it is called "twist in S direction" and if the incline shows similarity with the letter Z, it is called as "twist in Z direction". Twisting a fiber around itself is called as 1^{st} level twist, and twisting a fiber with another fiber is called as 2^{nd} level twist. For example, if the fibers are twisted around themselves in Z direction and twisted around each other in S direction, twisting is described as Z*S twist.

The composite fibers present in the fiber material in form of individually twisted fibers and/or twisted cords comprising at least two composite fibers contain non-metallic load bearing fibers, which are kept together by an organic synthetic material.

The non-metallic load bearing fibers can be selected from natural fibers, inorganic fibers and/or organic synthetic fibers.

For example, the non-metallic load bearing fibers are selected from carbon fibers, glass fibers, basalt fibers, polyolefin fibers, aramid fibers, vectran fibers, polyhydroquinone-diimidazopyridine fibers (PIPD fibers; M5 fibers), and poly(p-phenylen-2,6-benzobisoxazol) fibers (PBO fibers; Zylon).

In embodiments, the non-metallic load-bearing fibers comprise or consist of carbon fibers and/or at least one of polyhydroquinone-diimidazopyridine fibers and poly(p-phenylen-2,6-benzobisoxazol) fibers. These kind of fibers have turned out to be highly stable under alkaline conditions prevailing in cementitious compositions, resulting in a long lasting and secure reinforcement of a concrete structure.

In preferred embodiments, the non-metallic load-bearing fibers comprise or consist of carbon fibers. Carbon fibers have turned out to be optimal in terms of chemical stability, mechanical properties, and compatibility with organic synthetic materials for embedding.

Preferably, the organic synthetic material is a thermoset and/or a thermoplastic material.

Especially, the organic synthetic material may comprise a single material or a mixture of two or more materials.

For example, the organic synthetic material can be selected from epoxy resins, polyurethane resins, polyester resins, vinyl-ester resins, epoxy vinyl ester resins, polyolefins, vinyl polymers, polyamide, polyvinyl alcohol, polyester, polyoxymethylene, polycarbonate, thermoplastic polyurethane, and/or ionomers.

In embodiments, the organic synthetic material is selected from epoxy resins, epoxy vinyl ester resin, polyamide, polyvinyl alcohol, polyolefins, polyethylene terephthalate and/or poly(ethylene-vinyl acetate).These materials turned out to be highly suitable in the present context.

In particular, the epoxy resin and/or the epoxy vinyl ester resin is a one-component or a two-component curable resin. For example, a one-component resin comprises a latent curing agent, for example, dicyanamide. In this case, curing can be initiated by heating the resin to a predefined temperature.

In embodiments, the organic synthetic material is selected from epoxy resins, epoxy vinyl ester resins, polyolefins and/or polyethylene terephthalate, preferably from polypropylene and/or polyethylene terephthalate glycol (PET-G), more preferably polypropylene.

Especially, each composite fiber comprises at least 5, in particular at least 10, preferably at least 25, for example at least 50, particularly at least 100, especially preferred at least 500, advantageously at least 800 non-metallic load-bearing fibers. For example, each composite fiber contains 500 - 15000, preferably 1000 - 12000, more preferably 4000 - 12000 non-metallic load-bearing fibers.

Preferably, with respect to the total weight of a composite fiber, each composite fiber comprises 1 - 80 wt.-%, preferably 1 - 60 wt.-%, more preferably 5 - 50 wt.-% of the organic synthetic material and/or 15 - 98 wt.-%, preferably 30 - 95 wt.-%, more preferably 40 - 90 wt.-% of the non-metallic load bearing fibers.

The non-metallic load-bearing fibers may be fully or partially embedded in the organic synthetic material. For example, the non-metallic load-bearing fibers can be kept together by being only partially embedded in the surface of a common central core made of the organic synthetic material.

Furthermore, the composite fibers may be configured to have a core-shell structure with the non-metallic load-bearing fibers forming the core of the composite fibers and the organic synthetic material forming a casing around the core. Thereby, particularly, the non-metallic load-bearing fibers are only partially impregnated with the organic synthetic material, such that they can move relative to each other within the composite fibers.

The individually twisted composite fibers and/or the twisted cords have for example
- an equivalent diameter determined according to EN 14889-2:2006 standard of 0.1 - 2 mm, preferably 0.3 - 1.5 mm and/or
- a length of not more than 100 mm, preferably not more than 85 mm, particularly 10- 100 mm, preferably 15 - 80 mm and/or
- a linear density of 5 - 10000 tex, preferably 10 - 7500 tex.

Individually twisted composite fibers and twisted cords with these lengths and/or diameters are in particular beneficial because they can for example easily be mixed with mineral binder compositions such that the composite fibers are homogeneously distributed and embedded within the mineral binder compositions. Due to the rather short length, the composite fibers hardly protrude out of the surface of the matrix of the cured construction material, what usually is undesired. In addition, clumping of fibers is typically also reduced when compared with longer fibers. Nevertheless, despite the rather short length, the inventive fibers can be embedded within the matrix of the construction material such that sufficiently high pull-out forces and structural reinforcement are achievable. For special applications, other lengths and/or diameters might however be suitable as well.

The individually twisted composite fibers and/or twisted cords may further be surface structured at their outer surfaces. Especially, the individually twisted composite fibers and twisted cords may comprise recesses or other surface structures in their outer surface. This can be achieved, for example, by embossing, grinding, sandblasting and/or crimping.

The outer surfaces of the individually twisted composite fibers and/or twisted cords may for example have a root-mean-square roughness Rq (λ = 800 µm, 50 fold magnification) measured according to ISO 4287:1997 standard of 1 - 80 µm, especially 3 - 60 µm or 5 - 40 µm.

Especially, the surface-structure of the individually twisted composite fibers and twisted cords is configured such that the pull-out force of the embedded fibers is increased when compared to an unstructured fiber.

The individually twisted composite fibers may, for example, be produced by providing a composite fiber, for example by using a pultrusion process, and twisting the composite fiber around itself. A pultrusion process can, for example, include impregnating and/or coating of non-metallic load bearing fibers using a die or a bath of the organic synthetic material through which the non-metallic load-bearing fibers are pulled horizontally and/or vertically. Such processes are well known to a person skilled in the art. The application of a surface structure, if needed, may be conducted before and/or after the twisting of the composite fibers.

Furthermore, the twisting of the fibers can also be conducted as part of the pultrusion process. Thereby, in particular, a bundle of non-metallic load bearing fibers may first be twisted and then impregnated and/or coated by pulling through a bath of the organic synthetic material. The twisted fiber bundles obtained from the impregnation and/or coating step may further be subjected to a treatment to apply a surface structure, if applicable.

The twisted cords comprising at least two composite fibers twisted together can be produced, for example, by providing the composite fibers, for example, by using a pultrusion process, and twisting the obtained composite fibers around each other. The application of a surface structure, if needed, may be conducted before and/or after the twisting of the composite fibers together.

In embodiments, the fiber material further comprises:
c) at least one type of further fibers, which are chemically and/or physically different from the a) and b), wherein the further fibers are preferably selected from glass fibers, basalt fibers, metal fibers and/or synthetic organic fibers, especially synthetic organic fibers.

This allows for further adjusting the desired properties of the structure reinforced by using the fiber material.

In embodiments, the fiber material is substantially free of metal fibers, particularly of steel fibers. The expression "substantially free" is understood to mean that the fiber material contains less than 1 wt.-%, especially less than 0.1 %, based on the total weight of the fiber material, of metal fibers, especially steel fibers.

The further fibers have for example a linear density of 100 - 10000 tex, especially 250 - 5000 tex and/or an equivalent diameter determined according to EN 14889-2:2006 standard of 0.1 -2 mm, preferably 0.3 - 1.5 mm and/or a length of not more than 100 mm, especially 20 - 75 mm, particularly 20 - 65 mm.

In exemplary embodiments, the synthetic organic fibers are selected from polyethylene and/or polypropylene fibers. Particularly, the polymer composition of the further fibers may comprise at least 70 wt.-%, preferably at least 75 wt.-% of at least one polypropylene. The polymer composition of the further fibers may further comprise at least 1 wt.-%, preferably at least 5 wt.-%, more preferably at least 7.5 wt.-%, of at least one polyethylene.

Suitable polypropylenes include polypropylene homopolymers (hPP), such as isotactic polypropylene (iPP) and syndiotactic polypropylene (sPP), as well as propylene copolymers, for example heterophasic propylene copolymers, propylene random copolymers, and propylene block copolymers.

The term "propylene copolymer" refers to copolymers comprising at least 50 wt.-%, more preferably at least 60 wt.-% of propylene-derived units, based on the weight of the copolymer whereas the term "ethylene copolymer" refers to copolymers comprising at least 50 wt.-%, more preferably at least 60 wt.-% of ethylene-derived units, based on the weight of the copolymer.

Suitable polyethylenes for use in the polymer material include ethylene homopolymers and ethylene copolymers, such as low-density polyethylene (LDPE), linear low-density polyethylene (LLDPE), and high-density polyethylene (HDPE).

A second aspect of the present invention is directed to a cementitious material comprising:
i) A mineral binder,
ii) 0.01 - 3.0 vol.-%, preferably 0.1 - 2.0 vol.-%, based on the total volume of the cementitious material, of reinforcement fibers,
iii) Aggregates, and
iv) Water,
wherein the reinforcement fibers comprise:
a) Individually twisted composite fibers and/or
b) Twisted cords comprising at least two composite fibers twisted together and
c) Optionally further fibers which are chemically and/or physically different from a) and b), wherein the further fibers are preferably selected from glass fibers, basalt fibers, metal fibers and/or synthetic organic fibers, especially synthetic organic fibers.

In the inventive cementitious material, the individually twisted composite fibers, the twisted cords, the further fibers, the non-metallic load-bearing fibers, the organic synthetic material, the composite fibers, the linear densities, lengths and diameters of the fibers as well as any further features in particular are defined and configured as described above in connection with the first aspect of the present invention.

In particular, with respect to the total weight of the mineral binder, the mineral binder has a proportion of at least 5 wt.%, at least 20 wt.%, at least 35 wt.%, or at least 65 wt % of a hydraulic binder, for example, a cement.

The term "hydraulic binder" refers to substances, which react with water in a hydration reaction under formation of solid mineral hydrates or hydrate phases, which are not soluble in water or have a low water-solubility. Therefore, hydraulic binders, such as Portland cement, can harden and retain their strength even when exposed to water, for example underwater or under high humidity conditions. In contrast, the term "non-hydraulic binder" refers to substances, which harden by reaction with carbon dioxide and which, therefore, do not harden in wet conditions or under water.

Examples of suitable hydraulic binders include air-slaked lime (non-hydraulic lime) and gypsum. The term "gypsum" refers in the present disclosure to any known form of gypsum, in particular calcium sulfate dehydrate, calcium sulfate α-hemihydrate, calcium sulfate ß-hemihydrate, or calcium sulfate anhydrite or mixtures thereof.

The term "latent hydraulic binder" refers in the present disclosure to type II concrete additives with a "latent hydraulic character" as defined in DIN EN 206-1 :2000 standard. These types of mineral binders are calcium aluminosilicates that are not able to harden directly or harden too slowly when mixed with water. The hardening process is accelerated in the presence of alkaline activators, which break the chemical bonds in the binder's amorphous (or glassy) phase and promote the dissolution of ionic species and the formation of calcium aluminosilicate hydrate phases.

Examples of latent hydraulic binders include ground granulated blast furnace slag. Ground granulated blast furnace slag is typically obtained from quenching of molten iron slag from a blast furnace in water or steam to form a glassy granular product and followed by drying and grinding the glassy into a fine powder.

The term "pozzolanic binder" refers in the present disclosure to type II concrete additives with a "pozzolanic character" as defined in EN 206-1 :2000 standard. These types of mineral binders are siliceous or aluminosilicate compounds that react with water and calcium hydroxide to form calcium silicate hydrate or calcium aluminosilicate hydrate phases.

Examples of suitable pozzolanic binders include natural pozzolans, such as trass, and artificial pozzolans, such as fly ash and silica fume. The term "fly ash" refers in the present disclosure to the finely divided ash residue produced by the combustion of pulverized coal, which is carried off with the gasses exhausted from the furnace in which the coal is burned. The term "silica fume" refers in the present disclosure to fine particulate silicon in an amorphous form. Silica fume is typically obtained as a by-product of the processing of silica ores such as the smelting of quartz in a silica smelter which results in the formation of silicon monoxide gas and which on exposure to air oxidizes further to produce small particles of amorphous silica.

In exemplary embodiments, the mineral binder consists of at least 95 wt.-% hydraulic binder, especially cement. For example, the cement is of the CEM I, CEM II, CEM III, CEM IV or CEM V type (according to the standard EN 197-1).

However, the mineral binder can contain, or consist of, other binders. They are, for example, latent hydraulic binders and/or pozzolanic binders. Suitable latent hydraulic and/or pozzolanic binders are, for example, slag, fly ash and/or silica dust. Similarly, the construction material can contain inert substances, such as, for example, limestone, quartz powder and/or pigments. In exemplary embodiments, the mineral binder contains 5 - 95 wt.- %, for example, 5 - 65 wt %, such as, 15 - 35 wt.- % latent hydraulic and/or pozzolanic binders. Advantageous latent hydraulic and/or pozzolanic binders are slag and/or fly ash.

In exemplary embodiments, the mineral binder contains a hydraulic binder, especially a cement, and a latent hydraulic and/or pozzolanic binder, preferably slag and/or fly ash. The proportion of the latent hydraulic and/or pozzolanic binder here can be 5 - 65 wt.-%, especially 15 - 35 wt.-%, and at least 35 wt.-%, especially at least 65 wt.-% hydraulic binder, particularly cement.

Suitable aggregates include both coarse and fine (sand) aggregates as well as pebbles and rocks of various sizes, typically in the range of 10 mm - 20 mm (3/8" - 3/4").

In embodiments, the cementitious material is a fiber-reinforced mortar or concrete composition, particularly a concrete composition.

The weight ratio of the proportion of water to the proportion of the mineral binder is for example in the range of 0.2:1 to 0.7:1, preferably 0.3:1 to 0.6:1, more preferably 0.4:1 to 0.6:1, even more preferably 0.45:1 to 0.55:1.

A third aspect of the present invention is a fiber reinforced structure, especially a fiber reinforced concrete structure, comprising reinforcement fibers distributed within a matrix of a construction material, especially a mineral binder based construction material, wherein the reinforcement fibers comprise:
a) Individually twisted composite fibers and/or
b) Twisted cords comprising at least two composite fibers twisted together and
c) Optionally further fibers which are chemically and/or physically different from a) and b), wherein the further fibers are preferably selected from glass fibers, basalt fibers and/or synthetic organic fibers, especially synthetic organic fibers.

In the inventive fiber reinforced structure, the individually twisted composite fibers, the twisted cords, the further fibers, the non-metallic load-bearing fibers, the organic synthetic material, the composite fibers, the linear densities, lengths and diameters of the fibers as well as any further features in particular are defined and configured as described above in connection with the first aspect of the present invention.

Preferably, a content of the reinforcement fibers in the matrix of the construction material is from 0.1 - 10 kg/m³, especially 0.5 - 5 kg/m³. Thereby, the volume in m³ is meant to be the volume of the construction material without the reinforcement fibers or before adding the reinforcement fibers, respectively.

Especially, the density of reinforcement fibers in the matrix of the construction material is chosen in the range of 5000 - 2000000 composite fibers per m³, in particular 10000 - 1000000 composite fibers per m³, 100000 - 700000 composite fibers per m³. Thereby, the volume in m³ is meant to be the volume of the construction material without the reinforcement fibers or before adding the reinforcement fibers, respectively.

These contents and densities turned out to be optimal for reinforcing construction materials, especially mineral binder based construction materials, in particular concrete. However, depending on the requirements, other densities might be suitable as well.

In particular, the construction material comprises or consists of a mineral binder composition, especially a cementitious mineral binder composition, in particular a concrete or mortar composition.

In embodiments, the construction material, especially the mineral binder composition, contains a mineral binder and solid aggregates, for example, gravel, sand and/or rock aggregates.

In the inventive fiber reinforced structure, the mineral binder is defined and configured as described above in connection with the second aspect of the present invention.

Furthermore, the mineral binder composition may comprise at least one additive, for example, a concrete additive and/or a mortar additive. The at least one additive comprises, for example, a defoaming agent, a dye, a preservative, a plasticizer, a retarding agent, an air pore forming agent, a shrinkage reducing agent and/or a corrosion inhibitor or combinations thereof. Usually, such additives are present with a proportion of 0.0001 - 10 wt.%, with respect to the total weight of the mineral binder composition.

In embodiments, the construction material is a concrete composition.

In embodiments, the fiber reinforced structure fulfills the requirement F_{R,1}/F_{LOP} > 0.4, wherein F_{R,1} is the residual flexural strength at CMOD 0.5mm (after crack opening) and F_{LOP} is the maximum load before crack determined according to EN 14651:2005 standard.

Furthermore, in embodiments, the fiber reinforced structure fulfills the requirement F_{R,1} ≥1.5 MPa, preferably ≥ 1.7 MPa, more preferably ≥ 2 MPa, wherein F_{R,1} is the residual flexural strength at CMOD 0.5mm (after crack opening) determined according to EN 14651:2005 standard.

A fourth aspect of the present invention is a method for producing a fiber reinforced structure of the present invention comprising mixing of reinforcement fibers with a construction material, especially a mineral binder based construction material, particularly concrete, wherein the reinforcement fibers comprise:
a) Individually twisted composite fibers above and/or
b) Twisted cords comprising at least two composite fibers twisted together and
c) Optionally further fibers which are chemically and/or physically different from a) and b), wherein the further fibers are preferably selected from glass fibers, basalt fibers and/or synthetic organic fibers, especially synthetic organic fibers.

In the inventive method for producing a fiber reinforced structure, the individually twisted composite fibers, the twisted cords, the further fibers, the non-metallic load-bearing fibers, the organic synthetic material, the composite fibers, the linear densities, lengths and diameters of the fibers as well as any further features in particular are defined and configured as described above in connection with the first aspect of the present invention.

In embodiments, at least a portion of the reinforcement fibers are provided in form of one or more fiber puck(s) each comprising a plurality of the fibers a) and/or b) and/or optionally c) kept together by a water-soluble wrapping.

Each puck may for example contain only one type of fiber or several type of different fibers, such as the fibers a) and b) or a) and c) or b) and c). In this regard, in each puck, a plurality of fibers are kept together by a wrapping, preferably a water-soluble wrapping. For example, in a puck the fibers are kept together in parallel alignment. Providing the fiber material in form of puck(s) may be preferred since it enables controlled and efficient way of adding of the fibers to a construction material, particularly a mineral binder composition.

Especially, each puck may comprise for example 100 - 15000, particularly 1000 - 10000 fibers.

A water-soluble wrapping can for example be a water-soluble foil, for example made of polyvinyl alcohol (PVOH). If the wrapping is made from a water-soluble foil, upon contact with mixing water of the construction material, the wrapping will dissolve in water and release the individual fibers, which can then be mixed homogeneously with the construction material.

In the inventive method, the mineral binder composition is defined and configured as described above in connection with the third aspect of the present invention.

Especially, when mixing the reinforcement fibers with the construction material, the construction material is in a workable condition. In particular, if the construction material is a mineral binder composition, the mineral binder composition is present in non-hardened and workable state.

In particular, the reinforcement fibers are homogeneously distributed, especially randomly distributed, within the construction material. A content of the reinforcement fibers in construction material in particular is from 0.1 - 10 kg/m³, especially 0.5 - 5 kg/m³.

Especially, the fiber dosage is selected depending on the desired bending strength of construction material, for example the concrete composition, and/or the fiber tensile strength. For a construction material with a higher desired bending strength, the fiber dosage is increased whereas for a fiber with higher tensile strength, the dosage is lowered.

Still another aspect of the present invention is a method for forming a concrete surface comprising steps of:
I) Adding reinforcement fibers into a fluidized concrete mixture under mixer rotation to provide a modified concrete mixture,
II) Casting the modified concrete mixture prepared in step I) to provide a casted concrete body,
III) Smoothing the surface of the casted concrete body prepared in step II), and
IV) Curing the modified concrete mixture,
wherein the reinforcement fibers comprise:
a) Individually twisted composite fibers and/or
b) Twisted cords and
c) Optionally further fibers which are chemically and/or physically different from the a) and b), wherein the further fibers are preferably selected from glass fibers, basalt fibers and/or synthetic organic fibers, especially synthetic organic fibers.

In the inventive method for forming a concrete surface, the Individually twisted composite fibers, the twisted cords, the further fibers, the non-metallic load-bearing fibers, the organic synthetic material, the composite fibers, the linear densities, lengths and diameters of the fibers as well as any further features in particular are defined and configured as described above in connection with the first aspect of the present invention.

In embodiments, concrete mixture is a mineral binder composition, especially a mineral binder composition containing a mineral binder, solid aggregates, for example, gravel, sand and/or rock aggregates. Corresponding compositions can be formulated for example as mortar or concrete compositions.

In the inventive method for forming a concrete surface, the mineral binder composition is defined and configured as described above in connection with the third aspect of the present invention.

Smoothing of the surface of the casted concrete body can be conducted, for example, by using a pallet or a trowel.

### Examples

### Tested fiber materials

Three types of fiber materials were tested for their properties in concrete mixtures.

Fiber material **type A** consisted of non-twisted composite fibers having a linear density of 140 tex. The non-metallic load-bearing fibers contained in the composite fibers were composed of carbon fibers (40 vol.-%), which were kept together by an organic synthetic material composed of polypropylene (60 vol.-%).

Fiber material **type B** consisted of fiber cords composed of two composite fibers twisted around each other with a twist degree of 115 turns/meter. The non-metallic load-bearing fibers contained in the composite fibers were composed of liquid crystalline polymer (PBO) fibers (> 90 vol.-%), which were kept together by an organic synthetic material composed of polyurethane-based resin (< 10 vol.-%).

Fiber material **type C** consisted of individually twisted composite fibers having a twist degree of 37 turns/meter. The non-metallic load-bearing fibers contained in the composite fibers were composed of carbon fibers (90 vol.-%), which were kept together by an organic synthetic material composed a vinyl ester resin (10 vol.-%).

### Preparation of fiber reinforced concrete compositions

The fiber materials A, B, and C were tested in a standard concrete composition having a compressive strength of 40 - 50 MPa at an age of 28 days. Thereby, the respective fiber materials were added during preparation of the concrete composition together with 5kg of standard polymer fibers ("further fiber material) and mixed with the other components of the composition. SikaFiber^{®} -40 Force fibers (available from Sika Switzerland) were used as the standard polymer fibers.

The concrete was batched and mixed in accordance with ASTM C192-19 *Standard Practice for Making and Curing Concrete Test Specimens in the Laboratory.* The rock, sand, cementitious material, and the standard polymer fibers were mixed with each other for 30 seconds prior to addition of water and 60 seconds after the addition of the required amount of water. The tested fiber material was then added to the wet, premixed concrete and mixed in for another 90 seconds after which the concrete material was casted into molds.

### Test methods

### Residual (post-cracking) bending strength

Beam specimens according to EN 14651:2005 were produced from the prepared concrete compositions.

The flexural tensile strengths of the beam specimens were measured in accordance with EN 14651:2005 under a central line load. The test determines the residual (post-cracking) bending strength in MPa at various specified values of the opening of the preformed crack (CMOD), namely 0.5, 1.5, 2.5 and 3.5 mm, thus defining the falling branch of the load-deflection curve, from which the fR1/fLOP values can be determined.

### Peak release stress (single fiber pullout force)

A single fiber of a tested fiber material type is embedded at a length of 15 mm in a small block of a standard mortar. The standard mortar had a water/cement ratio of 0.44 and was made up of 37.5 wt.-% of cement (CEM II 42.5 N), 8.3 wt.-% of limestone filler (Nekarfill^{®} 15 from Kalkfabrik Netstal AG), 54.2 wt.-% of sand (0-2mm), 1 wt.-% (based on cement) of a plasticizer (Vicoscrete 3082 from Sika AG), and a drop of defoaming agent (Pronal^{®}).

After 28 days hydration time at 23°C and > 95 % humidity, the fiber is pulled out at a pull-out speed of 5 mm/min using a universal tensile tester (Zwick 010). The peak release stress is calculated by dividing the peak pull out force by the interfacial area between the fiber and concrete. Five test were performed for each fiber material type.

**Table 3**

| **Compositions** | **Ref-1** | **Ex-1** | **Ex-2** |
|---|---|---|---|
| Type CEM II - 42.5 cement [kg/m³] | 350 | 350 | 350 |
| Type BUC_0-16 precast aggregates [kg/m³] | 2180 | 2180 | 2180 |
| Viscocrete^{®} 3082 plasticizer [wt.-% of cement] | 0.8 | 0.8 | 0.8 |
| W/C ratio | 0.48 | 0.48 | 0.48 |
| Fiber type | A | B | C |
| Fiber linear density [tex] | 140 | 260 | 1000 |
| Fiber dosage [kg/m³]* | 2 | 2 | 2 |
| Fiber dosage [number/m³]* | 550000 | 260000 | 61000 |

| **Measured properties** | | | |
|---|---|---|---|
| Slump (EN 12350-5:2019) - After fiber addition [mm] | 55 | 54 | 53 |
| Air Content (EN 12350-7:2019) - After fiber addition [%] | 2-3 | 2-3 | 2-3 |
| Compressive strength (EN 12390-3:2019) after 28 days [MPa] | 45.2 | 44.4 | 49.2 |
| F_{R,1}/F_{LOP} (EN 14651:2005) [%] | 32 | 76 | 56 |
| Peak release stress [MPa] | 1.5 | 3 | 4 |

| | | | |
|---|---|---|---|
| *volume of concrete in m³ without the volume of fibers | | | |

## Claims

1. A fiber material for reinforcement of structures, especially concrete structures, the fiber material comprising:
a) A plurality of individually twisted composite fibers having a twist degree of 1 - 200 turns/m and/or
b) A plurality of twisted cords comprising at least two composite fibers twisted together and having a twist degree of 1 - 200 turns/m,
wherein each composite fiber comprises non-metallic load-bearing fibers kept together by an organic synthetic material.

2. The fiber material according to claim 1, wherein the individually twisted composite fibers have been obtained by twisting a composite fiber around itself, particularly in Z or S direction and/or wherein the twisted cords have been obtained by twisting two or more composite fibers around each other, particularly in Z or S direction.

3. The fiber material according to claim 1 or 2, wherein the non-metallic load-bearing fibers are selected from carbon fibers, glass fibers, basalt fibers, polyolefin fibers, aramid fibers, vectran fibers, polyhydroquinone-diimidazopyridine fibers, and poly(p-phenylen-2,6-benzobisoxazol) fibers.

4. The fiber material according to any one of previous claims, wherein the non-metallic load-bearing fibers comprise or consist of carbon fibers and/or at least one of polyhydroquinone-diimidazopyridine fibers and poly(p-phenylen-2,6-benzobisoxazol) fibers, preferably carbon fibers.

5. The fiber material according to any one of previous claims, wherein the organic synthetic material is selected from epoxy resins, epoxy vinyl ester resin, polyamide, polyvinyl alcohol, polyolefins, polyethylene terephthalate and/or poly(ethylene-vinyl acetate).

6. The fiber material according to any one of previous claims, wherein each composite fiber contains 500 - 15000, preferably 1000 - 12000 non-metallic load-bearing fibers.

7. The fiber material according to any one of previous claims, wherein each composite fiber comprises 1 - 60 wt.-%, preferably 5 - 50 wt.-% of the organic synthetic material and/or 30 - 95 wt.-%, preferably 40 - 90 wt.-% of the non-metallic load bearing fibers.

8. The fiber material according to any one of previous claims, wherein the composite fibers are configured as a core-shell structure with the non-metallic load-bearing fibers forming the core of the composite fibers and the organic synthetic material forming a casing around the core.

9. The fiber material according to any one of previous claims, wherein the individually twisted composite fibers and/or the twisted cords have an equivalent diameter determined according to EN 14889-2:2006 standard of 0.1 - 2 mm, preferably 0.3 - 1.5 mm and/or a length of 10 - 100 mm, preferably 15 - 80 mm and/or a linear density of 5 - 10000 tex, preferably 10 - 7500 tex.

10. The fiber material according to any one of previous claims further comprising:
c) at least one type of further fibers which are chemically and/or physically different from the a) and b), wherein the further fibers are preferably selected from glass fibers, basalt fibers and/or synthetic organic fibers, especially synthetic organic fibers.

11. The fiber material according to claim 10, wherein the further fibers have a linear density of 100 - 10000 tex, especially 250 - 5000 tex and/or an equivalent diameter determined according to EN 14889-2:2006 standard of 0.1 - 2 mm, preferably 0.3 - 1.5 mm and/or a length of not more than 100 mm, especially 20 - 75 mm.

12. A cementitious material comprising:
i) A mineral binder,
ii) 0.01 - 3.0 vol.-%, preferably 0.1 - 2.0 vol.-%, based on the total volume of the cementitious material, of reinforcement fibers,
iii) Aggregates, and
iv) Water,
wherein the reinforcement fibers comprise:
a) Individually twisted composite fibers as defined in any one of claims 1-11 and/or
b) Twisted cords as defined in any one of claims 1-11 and
c) Optionally further fibers which are chemically and/or physically different from the a) and b), wherein the further fibers are preferably selected from glass fibers, basalt fibers and/or synthetic organic fibers, especially synthetic organic fibers.

13. A fiber reinforced structure, especially a fiber reinforced concrete structure, comprising reinforcement fibers distributed within a matrix of a construction material, especially a mineral binder based construction material, preferably a concrete composition, wherein the reinforcement fibers comprise:
a) Individually twisted composite fibers as defined in any one of claims 1-11 and/or
b) Twisted cords as defined in any one of claims 1-11 and
c) Optionally further fibers which are chemically and/or physically different from the a) and b), wherein the further fibers are preferably selected from glass fibers, basalt fibers and/or synthetic organic fibers, especially synthetic organic fibers.

14. The fiber reinforced structure according to claim 13 fulfilling the requirement F_{R,1}/F_{LOP} > 0.4, wherein F_{R,1} is the residual flexural strength at CMOD 0.5 mm and F_{LOP} is the maximum load before crack determined according to EN 14651:2005 standard.

15. The fiber reinforced structure according to claim 13 or 14 fulfilling the requirement F_{R,1} ≥15 MPa, preferably ≥ 1.7 MPa, more preferably ≥ 2 MPa, wherein F_{R,1} is the residual flexural strength at CMOD 0.5mm determined according to EN 14651:2005 standard.

16. A method for producing a fiber reinforced structure according to any one of claims 13-15 comprising mixing of reinforcement fibers with a construction material, especially a mineral binder based construction material, wherein the reinforcement fibers comprise:
a) Individually twisted composite fibers as defined in any one of claims 1-11 and/or
b) Twisted cords as defined in any one of claims 1-11 and
c) Optionally further fibers which are chemically and/or physically different from the a) and b), wherein the further fibers are preferably selected from glass fibers, basalt fibers and/or synthetic organic fibers, especially synthetic organic fibers.

17. The method according to claim 16, wherein at least a portion of the reinforcement fibers are provided in form of one or more fiber puck(s) each comprising a plurality of the fibers a) and/or b) and/or optionally c) kept together by a water-soluble wrapping.
